Europäisches Patentamt

European Patent Office

Office européen des brevets

(19)

(11) Numéro de publication: **0 270 435**
**A1**

(12) **DEMANDE DE BREVET EUROPEEN**

(21) Numéro de dépôt: 87402576.0

(22) Date de dépôt: **16.11.87**

(51) Int. Cl.⁴: **G 06 K 17/00**
G 07 C 9/00

(30) Priorité: **17.11.86 FR 8615948**

(43) Date de publication de la demande:
**08.06.88 Bulletin 88/23**

(84) Etats contractants désignés:
**AT BE CH DE ES FR GB IT LI NL SE**

(71) Demandeur: **Thenery, Jean-Jaques**
**4 rue de l'Amandier**
**F-78400 Chatou (FR)**

(72) Inventeur: **Thenery, Jean-Jaques**
**4 rue de l'Amandier**
**F-78400 Chatou (FR)**

(74) Mandataire: **Martin, Jean-Jacques et al**
**Cabinet REGIMBEAU 26, Avenue Kléber**
**F-75116 Paris (FR)**

(54) **Installation pour la gestion de la ressource "visiteurs" dans un salon, foire ou analogue.**

(57) L'invention concerne une organisation comprenant un ensemble d'entités de prestation (12) et un ensemble d'individus (14) susceptibles d'entrer en relation avec lesdites entités de prestation, une installation pour créer, à partir d'un fichier global d'informations concernant chacun desdits individus, un ensemble de sous-fichiers, respectivement associés à chacune des entités de prestation, sur la base des relations établies entre lesdits individus et lesdites entités de prestation. Selon l'invention, l'installation comprend :

- des moyens de saisie (30) pour créer les fiches individuelles dudit fichier global à partir d'informations fournies par chaque individu,

- des moyens (30 pour associer à chaque fiche un numéro d'identification et pour éditer un badge personnel comportant un support dans lequel est encodé ledit numéro d'identification,

- un ensemble d'unités de lecture et de transfert de données (40) respectivement associés à chacune des entités de prestation (12) et aptes à enregistrer dans des unités de mémoire respectives les numéros d'identification lus à partir des badges de chacun des individus entrés en relation avec les entités de prestation respectives, et

- des moyens (70, 72, 22) pour créer, à partir du contenu desdites unités de mémoire et dudit fichier global, ledit ensemble de sous-fichiers.

FIG.1

EP 0 270 435 A1

**Description**

INSTALLATION POUR LA GESTION DE LA RESSOURCE "VISITEURS" DANS UN SALON, FOIRE OU ANALOGUE.

La présente invention concerne d'une façon générale les installations informatisées pour faciliter l'échange d'informations entre des entités de prestation et des personnes susceptibles d'entrer en relation avec lesdites entités. Par entité de prestation, on entend notamment les exposants ou analogues présents sur des salons ou autres foires d'exposition, les personnes susmentionnées étant alors les visiteurs, membre de la presse et personnalités susceptibles d'établir une relation avec lesdits exposants.

Dans la technique antérieure, il est courant de donner à chaque visiteur ou analogue soit préalablement, soit lorsqu'il souhaite accéder au salon, un badge d'identification pouvant porter le sigle spécifique du salon considéré et des données relatives à ce visiteur, par exemple ses nom et prénom. Cette délivrance d'un badge est fréquemment conditionnée par la fourniture préalable par le visiteur de données concernant son identité, son entreprise, sa fonction dans celle-ci, etc.

Une telle organisation a pour avantages principaux d'une part de s'assurer que les personnes circulant dans l'enceinte du salon sont habilitées, et d'éviter ainsi les fraudes ou la présence de personnes indésirables, et éventuellement de créer à l'occasion de la délivrance des badges un fichier global des visiteurs ou autres personnalités, qui s'avère intéressant à exploiter lorsque le salon est dit "professionnel", à clientèle ciblée.

Il existe cependant dans tous les types de salons et foires à accès informatisé ou non, des contraintes imposées à tout visiteur lors de son entrée en relation avec les exposants. Il est bien évident que les exposants, sur un plan le plus souvent commercial, sont intéressés par par toute une série de données concernant le visiteur en question, et ce dernier est donc amené, à chaque fois qu'il entre en relation avec un exposant, à remplir un questionnaire en indiquant ces données (entreprise, fonction, etc.)

Ainsi, il arrive qu'un visiteur, au cours de son séjour dans le salon, remplisse plusieurs dizaines de formulaires d'exposants en indiquant à chaque fois le même type de données, et ce sans compter la fourniture éventuelle d'informations conditionnant son entrée dans le salon.

Par ailleurs, les systèmes actuels opérant par fichier global pour présélectionner des visiteurs (envoi d'invitations par courrier, etc.) sont généralement figés, car il n'existe pas de moyens pour vérifier qu'un visiteur potentiel donné s'intéresse au salon considéré, par une présence régulière, ou bien s'en désintéresse et ne s'y rend jamais. Dans ce dernier cas, on comprend qu'il serait opportun de supprimer la présence de tels visiteurs dans le fichier, pour le réactualiser par exemple chaque année.

La présente invention vise à pallier ces inconvénients de la technique antérieure et à proposer une installation pour la gestion de la ressource "visiteurs" ou analogues dans une exposition du genre salon ou foire, qui permette en particulier un plus grand confort du visiteur et une plus grande efficacité dans les contacts exposants/visiteurs.

Un objet secondaire de l'invention est de proposer une telle installation, qui permette un meilleur contrôle de l'intérêt que les visiteurs portent à l'exposition en question.

A cet effet, la présente invention concerne une organisation comprenant un ensemble d'entités de prestation et un ensemble d'individus susceptibles d'entrer en relation avec lesdites entités de prestation, une installation pour créer, à partir d'un fichier global d'informations concernant chacun desdits individus, un ensemble de sous-fichiers, respectivement associés à chacune des entités de prestation, sur la base des relations établies entre lesdites individus et lesdites entités de prestation, caractérisé en ce qu'elle comprend :

- des moyens de saisie pour créer les fiche individuelles dudit fichier global à partir d'informations fournies par chaque individu,
- des moyens pour associer à chaque fiche un numéro d'identification et pour éditer un badge personnel comportant un support dans lequel est encodé ledit numéro d'identification,
- un ensemble d'unités de lecture et de transfert de données respectivement associés à chacune des entités de prestation et aptes à enregistrer dans des unités de mémoire respectives les numéros d'identification lus à partir des badges de chacun des individus entrés en relation avec les entités de prestation respectives, et
- des moyens pour créer, à partir du contenu desdites unités de mémoire et dudit fichier global, ledit ensemble de sous-fichiers.

De façon préférée, le support prévu sur le badge pour l'encodage du numéro d'identificaton consiste en un code à barres et les moyens de lecture et de transfert de données comprennent au moins un dispositif de lecture de codes à barres.

D'autres aspects et avantages de la présente invention apparaîtront mieux à la lecture de la description détaillée suivante de formes de réalisation préférées de celle-ci, donnée à titre d'exemple et faite en référence aux dessins annexés, sur lesquels :

- la figure 1 est une vue d'ensemble schématique d'une salle d'exposition du genre salon ou foire dans laquelle l'installation de la présente invention est mise en oeuvre,
- la figure 2 représente schématiquement une partie de l'installation,
- la figure 3 représente schématiquement une autre partie de l'installation,
- la figure 4 représente schématiquement une variante de la partie de la figure 3,
- la figure 5 représente une autre variante de la partie de la figure 3; et
- la figure 6 représente schématiquement une autre partie encore de l'installation de l'invention.

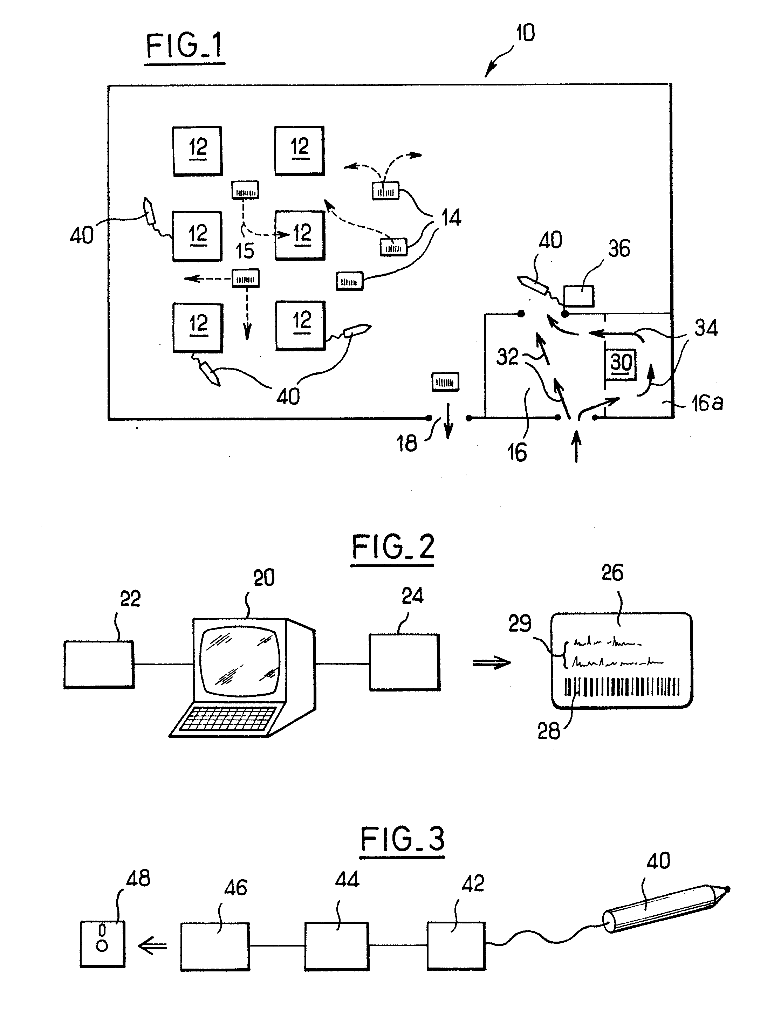

En référence tout d'abord à la figure 1, on a désigné par la référence 10 une enceinte telle qu'une salle d'expositions pour foires, salons ou toute autre manifestation collective, publique ou privée.

Dans l'enceinte 10 sont prévus un certain nombre de stands 12 sur lesquels sont présentes des entités de prestations.

Par entité de prestation, on entend ici toute sous-organisation de la manifestation, et notamment des exposants, des commerçants, des services d'accueil, des salles de séminaires, des services d'enquête ou de sondage, etc.

Un ensemble de visiteurs 14, schématisés par des rectangles porteurs d'informations, circulent dans l'enceinte 10 et peuvent se rendre librement sur les stands, comme le montre la flèche 15.

L'enceinte 10 comprend une zone d'accueil et d'entrée 16 et une sortie 18. La zone d'entrée 16 est aménagée de manière à pouvoir gérer l'accès de deux catégories principales de visiteurs. Une première catégorie comprend les visiteurs dits "pré-enregistrés" qui possèdent déjà à leur arrivée un badge personnalisé, et les visiteurs non enregistrés, qui doivent etre identifiés et recevoir un badge personnel au cours de la procédure d'accès, comme on le verra par la suite.

En ce qui concerne les visiteurs "pré-enregistrés", il s'agit de visiteurs qui se trouvent antérieurement à la date d'ouverture du salon par exemple dans un fichier "visiteurs" d'une unité informatique. La procédure consiste à envoyer à ces visiteurs un courrier les avertissant de la prochaine tenue du salon ainsi qu'un formulaire qu'ils doivent retourner complétés à l'organisateur du salon. Ce dernier, à la réception du formulaire complété, entre les informations contenues dans ce dernier dans la mémoire de masse d'un ordinateur, sous forme d'une fiche individuelle d'un fichier global. A chaque visiteur individuel est attribué, dans ledit ordinateur, un numéro d'identification unique. Un badge est ensuite édité. Il peut comporter le nom du visiteur, un sigle de reconnaissance relatif au salon ou foire en question et, conformément à l'invention, un support d'information tel qu'un code à barres dans lequel est encodé le numéro d'identification sus-mentionné. Ce badge est alors retourné par courrier au visiteur et conservé par ce dernier jusqu'à ce qu'il se rende au salon.

Les visiteurs non préenregistrés pourront se rendre au salon, mais ils devront alors compléter un formulaire identique ou similaire à celui mentionné plus haut, la création de la fiche individuelle et l'édition du badge s'effectuant alors immédiatement pour permettre l'accès du visiteur.

On a représenté sur la figure 2 un dispositif pour la saisie et la mémorisation des informations du formulaire et l'édition du badge. Il comprend une unité centrale 20 avec écran et clavier raccordée à une mémoire de masse 22 pour le fichier global. L'unité centrale se charge d'affecter à chaque fiche individuelle créée un numéro d'identification unique. Le dispositif comprend également un dispositif d'impression 24 qui recevra de l'unité centrale le numéro d'identification sus-mentionné et par exemple les nom, prénom et société du titulaire pour imprimer sur un badge vierge 26 d'une part un code à barres 28 dans lequel est encodé ledit numéro d'identification, et d'autre part une succession de caractères alpha-numériques 29 (nom, prénom et société).

Un tel dispositif pourra être utilisé aussi bien pour l'enregistrement et l'édition des badges en série des visiteurs de type "pré-enregistré", que pour effectuer ces opérations au "coup-par-coup" dans la zone d'entrée 16 du salon. A cet effet, on a représenté sur la figure 1 dans cette zone 16 une sous-zone d'enregistrement 16a, la référence 30 désignant un dispositif du type de celui de la figure 2, sur lequel sera postée une opératrice.

Bien entendu, en fonction de l'affluence envisagée, on pourra prévoir plusieurs de ces dispositifs pour réduire au minimum les temps d'attente. Lorsque plusieurs dispositifs sont prévus, ils peuvent opérer soit de manière locale, auquel cas les fichiers de données crées et mémorisés par chacun sont ultérieurement liés ensemble, soit sous forme de réseau local, auquel cas le fichier global est directement créé.

Sur la figure 1, on a indiqué par les flèches 32 le trajet direct qui sera emprunté par les visiteurs dits "pré-enregistrés", tandis que les visiteurs arrivant en étant dépourvus d'un badge emprunteront le trajet défini par les flèches 34.

Bien entendu, cette structure d'accès au salon pourra prendre toute autre forme Notamment, elle pourra comporter en outre un ou plusieurs guichets permettant aux visiteurs d'acquitter leur droit d'entrée.

Pour un salon de type réservé aux professionnels, chaque fiche "visiteur" créée dans la mémoire de masse 22 pourra comporter par exemple les informations suivantes :

- Nom, adresse et numéro de téléphone du visiteur,
  - Nom de l'entreprise,
  - Nombre de salariés dans l'entreprise,
  - Secteur d'activité de l'entreprise,
  - Fonction et service dans l'entreprise,
  - Domaines d'intérêt.

En outre, la partie du dispositif telle que décrite jusqu'à présent pourra également être adaptée pour gérer différents types de visiteurs. Ainsi, lors de la saisie de la fiche individuelle, on pourra prévoir l'entrée d'une information relative à la qualité du visiteur : visiteur ordinaire, journaliste, exposant, haute personnalité, etc. Comme on le verra plus loin, cette information pourra être encodée dans le code à barres 28 du badge personnel 26 à côté du numéro d'identification proprement dit, ou bien faire partie intégrante de ce numéro d'identification.

A titre d'exemple, le code à barres 28 pourra contenir dix caractères alphanumériques encodés, trois étant réservés au type de ce visiteur porteur du badge et les sept autres constituant son numéro d'identification.

L'installation conforme à la présente invention comporte en outre, entre la zone d'entrée 16 du salon et la salle 10 proprement-dite, un dispositif de contrôle d'accès schématiquement indiqué en 36.

Ce dispositif aura pour fonction d'une part de vérifier que les visiteurs souhaitant entrer dans le salon sont habilités, c'est-à-dire qu'ils sont possesseurs du badge et donc qu'ils ont été enregistrés , et d'autre part, de créer une liste des personnes qui sont effectivement venues au salon.

Une première forme de réalisation de ce dispositif est représentée sur la figure 3. Il comprend un crayon optique 40 relié par l'intermédiaire d'une unité de décodage 42 à une unité centrale 44 associée à une mémoire non volatile 46 tel qu'une unité de lecture/enregistrement de disque souple.

Le crayon optique 40 est manipulé par un opérateur tenant lieu de contrôleur d'entrée pour lire les codes à barres des badges de chacun des visiteurs se présentant au contrôle, et le dispositif mémorise dans la mémoire 46 la succession de codes d'identification décodés par l'unité 42, et ce pendant toute la durée du salon.

Le mémoire contient ainsi les identificateurs de toutes les personnes qui sont venues au salon considéré, ces informations pouvant être utiles par exemple pour réactualiser le fichier de visiteurs préenregistrés notamment pour éliminer de celui-ci les visiteurs qui manifestent un défaut d'assiduité.

Par ailleurs, on pourra prévoir, en association avec cette liste mémorisée, des moyens de traitement permettant d'associer à chaque identificateur une information représentative de la date, de l'heure, et éventuellement de la fréquence des visites. Un tel type d'information pourra être utilisé soit à des fins statistiques, soit pour sélectionner ultérieurement dans le fichier global "visiteurs" tel ou tel type de visiteur.

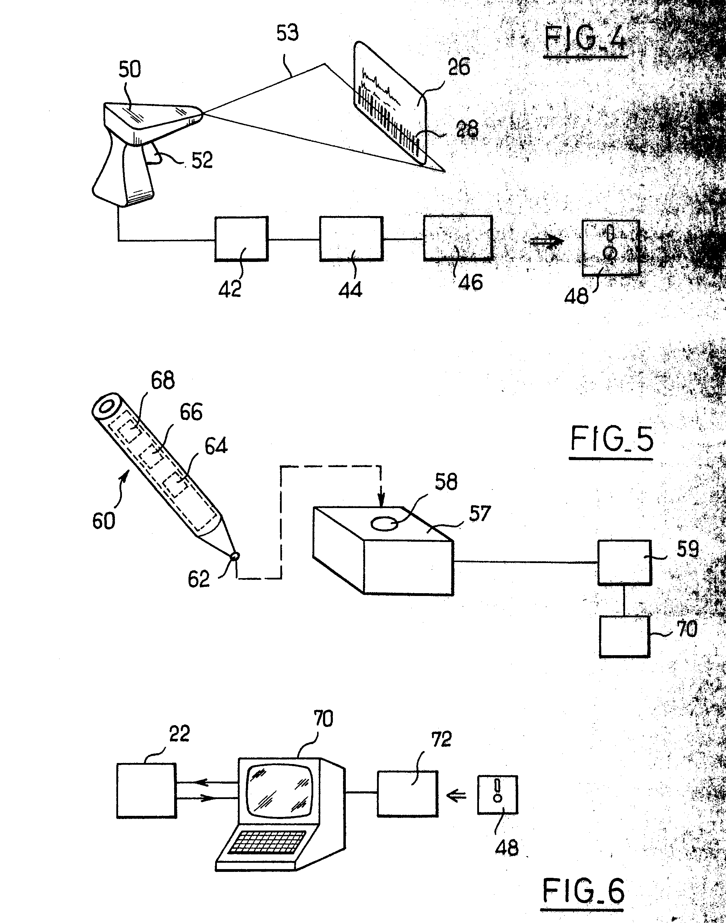

La figure 4 représente une variante de réalisation du dispositif de la figure 3. Ce dispositif comprend, à la place du crayon optique, un pistolet de lecture 50 muni d'une gâchette 52.

Lorsque le contrôleur souhaite lire le code à barres du badge du visiteur, il déclenche par la gâchette 52 l'émission d'un pinceau de rayons LASER 53 de forme plate et destiné à lire d'un bloc l'ensemble du code à barres 28.

L'avantage de ce dispositif à pistolet réside dans le fait qu'il permet de lire à distance le code d'identification de chacun des visiteurs, par exemple fixé sur sa poitrine, par opposition au crayon optique, qui doit impérativement être appliqué directement sur le badge, avec un certain désagrément pour le visiteur.

Dans les deux cas ci-dessus, l'unité de décodage 42 pourra comprendre des moyens de validation qui, dés que le code aura été correctement lu et décodé, provoqueront l'émission d'un signal sonore ou lumineux signalant au contrôleur que la personne peut alors entrer dans l'enceinte 10.

Une autre variante du dispositif de contrôle d'accès, non représentée, pourra comprendre une unité de lecture de code à barres sans opérateur, dans laquelle le visiteur introduira lui-même son badge, la lecture du code déclenchant l'ouverture d'un appareil de contrôle de passage du genre tourniquet ou analogue. L'avantage principal de cette solution réside dans l'économie de personnel, mais en contrepartie, chaque visiteur doit détacher son badge et l'introduire dans l'unité de lecture pour pouvoir passer.

Quelle que soit la configuration pratique du dispositif de contrôle et d'enregistrement des accès, et dans le cas où le code à barres comporte une information relative à la qualité du visiteur, comme on l'a indiqué plus haut, ce dispositif pourra être utilisé pour signaler à une unité d'accueil spéciale, immédiatement après la lecture de leur badge, l'arrivée de visiteurs importants tels que les hautes personnalités ou des journalistes.

Ainsi, ne circulent dans le salon que des visiteurs ou analogues qui sont munies d'un badge personnalisé qui permet leur identification immédiate par exemple par leur nom et celui de la société à laquelle ils appartiennent et qui permet, par une lecture de leur code à barres personnalisé et un traitement approprié faisant intervenir le fichier global "visiteurs", la prise de connaissance de tout ou partie des informations contenues dans la fiche associée du fichier global.

Un avantage important de cette organisation conforme à la présente invention est une grande sécurité pour le visiteur : les informations qu'il a fournies en remplissant le formulaire restent confidentielles au niveau de l'organisation du salon, et si son badge est égaré ou dérobé, personne ne pourra en tirer ces informations. Seul le contenu du code à barres pourra être éventuellement lu, mais ce ne sont que les personnes habilités à accéder au fichier global, qui sera avantageusement protégé par les méthodes conventionnelles, qui pourront tirer parti de ce contenu.

Conformément à l'invention, tous les exposants, ou seulement une partie de ceux-ci, disposeront sur leur stand 12 d'un dispositif de lecture de codes à barres, comme le montre la représentation schématique d'un certain nombre de crayons optiques 40 sur la figure 1.

Ces dispositifs de lecture pourront etre du type représenté sur les figures 3 ou 4. Mais une réalisation particulièrement avantageuse d'un lecteur pour exposants est représenté sur la figure 5. Il est du genre crayon optique et comprend un boîtier portatif 60 de forme générale cylindrique. A une extrémité du boîtier est prévue une ouverture 62 associée à un lecteur optique interne de codes à barres (non visible). Le boîtier abrite par ailleurs comme schématisé par des traits pointillés, une unité centrale 64 formant également décodeur des codes à barres lus et une mémoire vive 66, par exemple d'une capacité de plusieurs kilooctets, sauvegardée par un accumulateur 68. Un tel lecteur optique portatif à sauvegarde est connu notamment sous la dénomination "Datawand", fabriqué par la société MSI, ETATS-UNIS d'AMERIQUE.

Ce crayon optique est fourni à chaque exposant (ou à seulement une partie de ceux-ci, selon l'organisation envisagée) qui peut ainsi lire et mémoriser le code d'identification de tout ou partie des visiteurs venant sur le stand, moyennant bien entendu l'accord de ces derniers pour une telle lecture.

Selon la capacité de la mémoire 66 et l'affluence des visiteurs sur le stand, un tel boîtier pourra assurer le stockage des codes d'identification par exemple sur une journée, ou éventuellement sur toute la durée du salon.

Dans le cas où les lecteurs de codes à barres qui équipent les stands 12 sont du type représenté sur les figures 3 ou 4, alors le support mémoire 48 des codes d'identification lus et décodés pourra consister en tout dispositif connu, tel qu'un disque souple (auquel cas sera prévu en association avec l'unité centrale 44 un lecteur/enregistreur de disques souples), ou encore une cartouche de mémoire vive sauvegardée par accumulateur.

Ici encore, l'unité centrale pourra comporter des moyens de traitement pour associer à chaque code d'identification la date et l'heure de la viste, ainsi qu'éventuellement la fréquence des visites (dans le cas où les badges des visiteurs sont systématiquement lus à l'entrée du stand et que des visiteurs reviennent plusieurs fois sur celui-ci.)

Ainsi les exposants dont le stand est équipé d'un ou de plusieurs dispositifs de lecture et de sauvegarde disposent, par exemple en fin de journée ou en fin de salon, d'un support d'informations (boîtier 60, disque souple 48, etc.) contenant les codes d'identification de chacun des visiteurs dont le badge a été lu. Afin d'éviter toute erreur au niveau du traitement ultérieur de ces informations, comme on va le voir plus loin, on pourra inscrire sur le support d'informations, par voie physique ou de préférence numérique (avec un éventuel dispositif d'inviolabilité), des données d'identification de l'exposant en question. De façon préférée, lorsque le support d'informations consiste en un crayon de lecture et de sauvegarde intégré 60 tel que décrit plus haut et que ce crayon contient dans une mémoire morte un numéro de série figé une fois pour toutes, ce numéro de série peut tenir lieu d'identificateur de l'exposant.

Une autre solution pourra consister, par exemple à chaque début de journée, à charger tout d'abord, dans la mémoire de sauvegarde des codes d'identification des visiteurs, le code d'identification de l'exposant, ceci pouvant être effectué de façon très simple par lecture du code à barres du badge de l'exposant. Cette solution est avantageuse en ce qu'elle évite que les codes d'identification de visiteurs collectés par le lecteur puissent être utilisée par des personnes non habilitées.

Enfin, l'installation conforme à la présente invention comporte des moyens pour fournir aux exposants qui ont collecté des codes d'identification de visiteurs de la manière décrite plus haut un sous-fichier dérivé du fichier global "visiteurs" mentionné plus haut et contenant les fiches relatives aux personnes dont les codes d'identification ont été relevés. On a représenté sur la figure 6 une unité centrale 70 avec écran et clavier, par exemple un micro-ordinateur, qui communique avec la mémoire de masse 22 décrite en référence à la figure 2 et contenant le fichier global "visiteurs", contenant les fiches relatives aux visiteurs pré-enregistrés et aux visiteurs enregistrés lors de leur accès au salon.

On prévoira en association avec l'unité centrale 70 d'une part, des moyens de lecture du contenu du ou des supports d'information associés à chaque exposant et d'autre part, des moyens logiciels pour créer à partir des codes d'identification ainsi lus un sous-fichier personnalisé. Dans le cas où les supports de mémorisation des codes d'identification des visiteurs sont constitués par des disques souples, les moyens de lecture comprendront un lecteur/enregistreur de disques souples, indiqué en 72.

Dans le cas où les supports sont des boîtiers portatifs 60 tels que décrits en référence à la figure 5, alors on reliera à l'unité centrale 70 un lecteur pour ce type de boîtier, lecteur qui se présente, comme le montre la figure 5, sous forme d'un boîtier 57 comportant un orifice 58 dans lequel le boîtier 60 peut être partiellement inséré. Des moyens de communication électrique (par connecteurs), magnétique ou optique entre ces deux éléments sont prévus, bien que non représentés, d'une part, pour vider la mémoire 66 du crayon optique 60 dans l'unité centrale 70, par l'intermédiaire d'une interface 59, et d'autre part, pour remettre ladite mémoire 66 à zéro pour une utilisation ultérieure du crayon 60.

D'une façon générale, quelle que soit la forme du support portatif des codes d'identification, on prévoit avantageusement une remise à zéro de celui-ci après son vidage dans la mémoire de l'unité centrale 70.

En outre, le sous-fichier personnalisé destiné à chaque exposant pourra se présenter soit sous la forme d'un listage de tout ou partie des données relatives à chaque individu et contenues dans sa fiche, soit d'un disque souple contenant ledit sous-fichier sous une forme accessible et exploitable par un logiciel du genre gestionnaire de bases de données, dans le cas où l'exposant dispose de l'infrastructure informatisée adéquate.

Ainsi, l'invention permet de simplifier considérablement les relations entre un ensemble de visiteurs et des exposants, ou plus généralement entre un ensemble de personnes susceptibles d'entrer en relation avec des entités de prestation mise à la disposition desdites personnes. Les visiteurs n'ont pas à répéter sur chacun des stands le remplissage fastidieux d'un formulaire, mais une simple opération de lecture du code à barres de leur badge nominatif vient à chaque fois de substituer à ce remplissage. Il en résulte un gain de temps considérable à la fois pour les visiteurs et les exposants pendant le salon, mais également ultérieurement pour les exposants, qui disposent d'un fichier facilement exploitable relatif aux contacts noués au cours du salon.

Bien entendu, la présente invention ne se limite pas aux formes de réalisation décrites ci-dessus et représentées sur les dessins, mais elle inclut dans son cadre toute variante ou modification qui viendra à l'esprit de l'homme de l'art.

En particulier, en fonction de la taille du salon ou autre réunion (nombre d'exposants), de son affluence (nombre de visiteurs), de sa durée, etc., on dimensionnera de manière appropriée les divers dispositifs faisant partie de l'installation de l'invention et on les prévoira en tout nombre approprié.

Par ailleurs, il est bien entendu que l'homme de l'art pourra imaginer toute autre forme d'encodage du numéro d'identification propre à chaque visiteur.

Par exemple, le badge pourra être de type magnétique. Dans ce cas, le dispositif d'impression sera remplacé par une unité d'écriture sur la ou les pistes magnétiques du badge, et chaque stand sera équipé d'une ou plusieurs unités pour la lecture seule des badges magnétiques.

Un autre support pouvant être utilisé pour le numéro d'identification est la mémoire vive d'une carte à mémoire. De même, on saura prévoir en association avec ce type de carte les moyens d'écriture seule et les moyens de lecture seule appropriés.

Enfin, un type de codage d'informations pouvant bien convenir pour l'application conforme à l'invention consiste en un codage optique connu sous la dénomination commerciale "Softstrip" (Marque déposée), conformément aux demandes de brevet européen publiées no 0 216 859 et 0 218 634 au nom de Cauzin Systems.

Il est clair que l'invention s'appliquera, outre aux foires, salons, etc. à tout type d'évènement tel que les expositions, les séminaires, les réunions politiques, les manifestations sportives, cette liste n'étant bien entendu pas limitative.

On peut noter à cet égard que l'installation conforme à l'invention peut être utilisée dans un cadre plus vaste, en association avec d'autres types de données.

Un premier exemple d'extension de l'application consiste à associer à chaque code d'identification saisi sur un stand à l'aide d'un crayon optique ou autre, d'autres informations, et notamment des informations relatives aux pôles d'intérêts du porteur du badge considéré, aux produits qui l'intéressent, etc.

Sur le plan technique, plusieurs solutions peuvent être envisagées à cet effet.

La première, applicable lorsque le code d'identification lu sur un badge est instantanément transféré dans la mémoire d'un micro-ordinateur local, consiste à introduire, dans des champs de la mémoire associés au code considéré, par exemple par saisie sur un clavier, des données (par exemple numériques) représentatives des pôles d'intérêt, produits,... spécifiques.

La création ultérieure du sous-fichier destiné au prestataire considéré sera bien entendu conçue pour tenir compte de ces informations complémentaires, par exemple en les incorporant dans la fiche client considérée.

Une autre solution, qui s'applique très avantageusement lorsque la lecture des badges sur stand s'effectue par crayon optique portatif à mémoire sauvegardée incorporée, consiste à saisir, après la lecture du badge, un ou plusieurs codes à barres supplémentaires prévus par exemple sur des catalogues et encodant des informations représentatives des pôles d'intérêt, produits,...

La prise en compte de ces données complémentaires au niveau de la création du sous fichier peut s'effectuer comme décrit plus haut.

Un autre exemple d'extension de la présente invention, particulièrement approprié pour la gestion de séminaires et analogues, consiste à prévoir sur le badge de chaque visiteur, en clair ou de façon encodée, des données d'habilitation, indiquant par exemple les références des séminaires auxquels le porteur du badge est admis à participer.

Par exemple, une lecture optique à l'entrée d'une salle de séminaire permettra ainsi simultanément de vérifier l'habilitation du porteur à participer à ce séminaire, et de conserver en mémoire l'ensemble des codes d'identification des participants effectifs, par exemple à des fins de création d'un sous-fichier similaire à celui fourni, dans la description qui précède, à un prestataire ou exposant.

Enfin, on peut noter que l'invention peut être utilisée très avantageusement lorsque, dans le cadre considéré, des enquêtes ou sondages sont pratiqués. En effet, il devient possible d'éviter de saisir à la main sur un formulaire un certain nombre d'informations qui sont déjà contenues dans la banque de données centrale en association avec le code d'identification propre au porteur de badge sondé; deux solutions de base peuvent être envisagées à cet égard :

- dans le cas où le code d'identification figure en clair sur le badge, en plus du code à barres, il suffit à l'enquêteur de le reporter sur le formulaire. A la fin de l'enquête on associera alors, de préférence au niveau du traitement informatique de dépouillement, les informations contenues dans la banque de donnée pour chaque code considéré avec celles qui ont été recueillies par l'enquêteur;

- dans le cas où l'identification ne figure que sous forme encodée, dans un code à barres ou autre, alors l'enquêteur est muni d'un lecteur portatif qui lui permet de lire le code de chaque personne sondée et soit de le visualiser sur un afficheur approprié, pour ensuite le reporter à la main sur la fiche d'enquête, soit de lire ensuite un code à barres spécifique porté par la fiche d'enquête et d'associer ces deux codes dans une mémoire du lecteur portatif pour traitement ultérieur.

## Revendications

1. Dans une organisation comprenant un ensemble d'entités de prestation (12) et un ensemble d'individus (14) susceptibles d'entrer en relation avec lesdites entités de prestation, une installation pour créer, à partir d'un fichier global d'informations concernant chacun desdits individus, un ensemble de sous-fichiers, respectivement associés à chacune des entités de prestation, sur la base des relations établies entre lesdits individus et lesdites entités de prestation, caractérisé en ce qu'elle comprend :

- des moyens de saisie (20, 22) pour créer les fiches individuelles dudit fichier global à partir d'informations fournies par chaque individu,

- des moyens (20, 24) pour associer à chaque fiche un numéro d'identification et pour éditer un badge personnel (26) comportant un support (28) dans lequel est encodé ledit numéro d'identification.

- un ensemble d'unités de lecture et de transfert de données (40, 42, 44, 46; 50; 60) respectivement associés à chacune des entités de prestation (12) et aptes à enregistrer dans des unités de mémoire respectives (48; 60), les numéros d'identification lus à partir des badges de chacun des individus entrés en relation avec les entités de prestation respectives, et

- des moyens (70, 72, 22) pour créer, à partir du contenu desdites unités de mémoire et dudit fichier global, ledit ensemble de sous-fichiers.

2. Installation selon la revendication 1, caractérisée en ce que le support prévu sur le badge (26) pour l'encodage du numéro d'identification consiste en un code à barres (28) et en ce que les moyens de lecture et de transfert de données comprennent au moins un dispositif de lecture (40; 50; 60) de codes à barres.

3. Installation selon la revendication 2, pour une organisation dans laquelle lesdites entités de prestation (12) sont prévues dans une enceinte fermée (10) comportant une zone d'entrée (16), caractérisée en ce qu'elle comprend en outre dans ladite zone des moyens de lecture de code à barres (40) et de mémorisation des numéros d'identification conditionnant l'accès des individus à ladite enceinte.

4. Installation selon la revendication 3, caractérisée en ce qu'au moins une partie des moyens de saisie (20, 22) et des moyens d'édition (24) sont prévus dans ladite zone d'entrée (16).

5. Installation selon l'une quelconque des revendications 2 à 4, caractérisée en ce que les moyens d'édition comprennent une imprimante matricielle (24).

6. Installation selon l'une quelconque des revendications 2 à 5, caractérisée en ce qu'au numéro d'identification encodé dans le code à barres (28) est associée une information complémentaire relative à la qualité de l'individu.

7. Installation selon l'une quelconque des revendications 2 à 6, caractérisée en ce que les moyens de lecture de code à barres comprennent un lecteur portatif autonome (60) constituant également ladite unité de mémoire.

8. Installation selon l'une quelconque des revendications 1 à 7, caractérisée en ce que les sous-fichiers sont fournis aux entités de prestation respectives sous formes de listages ou de disques souples.

9. Installation selon l'une quelconque des revendications 1 à 8, caractérisée en ce que les unités de mémoire (48,60) contiennent également des moyens d'identification des entités de prestation respectives.

0270435

FIG_1

FIG_2

FIG_3

FIG.4

FIG.5

FIG.6

Office européen
des brevets

**RAPPORT DE RECHERCHE EUROPEENNE**

Numero de la demande

EP 87 40 2576

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 110 085 (VAN BERKEL'S PATENT N.V.)<br>* Figures 1,4; abrégé; page 6, lignes 19-23; page 9, lignes 3-10 *<br>--- | 1-5,8-9 | G 06 K 17/00<br>G 07 C 9/00 |
| Y | FR-A-2 494 466 (OCTEC)<br>* Figures 1-3; page 5, lignes 3-23; page 6, lignes 5-6,31-36 *<br>--- | 1-5,8-9 | |
| A | US-A-3 929 277 (J.A. BYRNE)<br>* Abrégé; figure 1 *<br>--- | 1-3,6 | |
| A | FR-A-2 323 194 (MAZZOLI)<br>* Figure 3; revendication 1 *<br>--- | 1 | |
| A | US-A-3 742 453 (M.C. POYLO)<br>* Figures 1,2; colonne 2, ligne 51 - colonne 3, ligne 5; colonne 3, lignes 35-40 *<br>--- | 1,4 | |
| A | FR-A-2 159 017 (PLESSEY)<br>* Figure; page 1, lignes 10-12,30-31; page 2, lignes 12-16 *<br>----- | 7 | **DOMAINES TECHNIQUES RECHERCHES (Int. Cl.4)**<br><br>G 06 K<br>  43 A 41<br>G 07 B<br>G 07 C<br>G 07 F |

Le présent rapport a été établi pour toutes les revendications

| Lieu de la recherche | Date d'achèvement de la recherche | Examinateur |
|---|---|---|
| LA HAYE | 22-02-1988 | HENROTTE I. |